# EUROPÄISCHE PATENTANMELDUNG

(11) **EP 0 534 289 A1**
(43) Veröffentlichungstag der Anmeldung: **31.03.1993**
(21) Anmeldenummer: 92115790.5
(22) Anmeldetag: 16.09.1992
(51) Int. Cl.: C07F 5/06

(54) **Farbige, kristalline Alumophosphate und/oder Silicoalumophosphate vom AEL-Typ oder VFI-Typ**

(30) Priorität: 21.09.1991 DE 4131447
(71) Anmelder: BASF Aktiengesellschaft, D-67063 Ludwigshafen (DE)
(72) Erfinder: Lauth, Günther, Dr., W-6711 Grosskarlbach (DE); Müller, Ulrich, Dr., W-6730 Neustadt (DE); Hoelderich, Wolfgang, Dr., W-6710 Frankenthal (DE); Brode, Stefan, Dr., W-7500 Karlsruhe 21 (DE); Wagenblast, Gerhard, Dr., W-6719 Weisenheim (DE)

(57) **Zusammenfassung**

Farbige, kristalline Alumophosphate und/oder Silicoalumophosphate vom AEL-Typ oder VFI-Typ und solche vom AEL-Typ mit folgendem Röntgenbeugungsdiagramm:

| Interplanarer Abstand d(A) | Relative Intensität I/Iₒ x 100 |
|---|---|
| 10,91 ± 0,1 | 26 ± 10 |
| 9,19 ± 0,1 | 41 ± 10 |
| 6,79 ± 0,05 | 16 ± 10 |
| 5,57 ± 0,05 | 52 ± 10 |
| 4,39 ± 0,05 | 39 ± 10 |
| 4,18 ± 0,05 | 71 ± 10 |
| 4,09 ± 0,05 | 33 ± 10 |
| 3,98 ± 0,05 | 57 ± 10 |
| 3,86 ± 0,05 | 68 ± 10 |
| 3,81 ± 0,05 | 100 |

oder VFI-Typ einer durch folgende Formel beschriebene Zusammensetzung:

a Chinizarin · b Al₂O₃ · c P₂O₅ · d SiO₂

in der a zwischen 0,05 und 2, b und c zwischen 8 und 12, und d zwischen 0 und 4 liegt sowie Verfahren zu deren Herstellung und deren Verwendung als Farbstoffe, optische Elemente sowie als Adsorptionsmittel.

## Beschreibung

Die vorliegende Erfindung betrifft neue, farbige, kristalline Alumophosphate und/oder Silicoalumophosphate vom AEL-Typ oder VFI-Typ, Verfahren zu ihrer Herstellung, sowie deren Verwendung.

Aus der US-A-4,310,440 sind eine Vielzahl mikroporöser Alumophosphate (Kurzbezeichnung: ALPOs) bekannt. Danach werden diese hergestellt, indem als Ausgangskomponenten neben phosphor- und aluminiumhaltigen Verbindungen sogenannte Template (Strukturbildner) verwendet werden. Als Template kommen eine Vielzahl organischer Stickstoff-Verbindungen (z.B. Amine, Ammoniumverbindungen, Stickstoff-Heterocyclen) in Betracht. Je nach Art des Templats und Reaktionsbedingungen sind viele verschiedene Aluminiumphosphatstrukturen herstellbar, die durch ihre unterschiedlichen Röntgenbeugungsdaten charakterisiert werden.

Die bekannten Alumophosphate unterscheiden sich in ihrem Aufbau des Hohlraumsystems, also in Porengröße, Porenvolumen und Oberfläche. Diese Unterschiede bedingen unterschiedliche Eigenschaften, wie Adsorptionskapazitäten, die Fähigkeit zur Trennung bestimmter Stoffe oder katalytische Aktivität.

Alumophosphate bestehen aus einem Kristallgitter, welches aus TO₄-Tetraedern aufgebaut ist, wobei als Tetraederatome T Phosphor und Aluminium auftreten. Im allgemeinen sind die Anzahl der AlO₄- und der PO₄-Tetraeder gleich, so daß das Kristallgitter keine Ladung trägt und daher auch keine ladungsausgleichenden Kationen vorhanden sind.

Mikroporöse Alumophosphate finden Anwendung als Adsorbentien, sowie als Katalysatoren oder als Katalysatorträger (Übersichtsartikel: E.M. Flanigen et al.: "Structural, synthetic and physicochemical concepts in aluminophosphate-based molecular sieves" in "Inovation in Zeolite Materials Science" P.J. Grobet et al. (Hrsg.), Elsevier, 1988, S. 13 bis 27).

Nach der US-A-4,440,871 ist es möglich, in das Kristallgitter dieser Alumophosphate zusätzlich Silicium einzulagern, wodurch man zu den Silicoalumophosphaten (Kurzbezeichnung: SAPOs) gelangt.

Die Synthese der SAPOs verläuft in analoger Weise zu der der ALPOs, wobei zusätzlich eine Siliciumquelle zu dem Syntheseansatz gegeben wird. Die Ladung der im Kristallgitter der SAPOs enthaltenden AlO₄-, PO₄- und SiO₄-Tetraeder kompensieren sich im allgemeinen nicht, so daß sich ein geladenes Kristallgitter ergibt, dessen Ladung durch Gegenionen ausgeglichen sein muß.

Aus diesem Grund können SAPOs neben den schon bei den ALPOs erwähnten Anwendungen auch als Ionenaustauscher Verwendung finden. Weiterhin stellen SAPOs in ihrer H-Form feste Säuren dar, können demnach z.B. als brönsted-acide Katalysatoren eingesetzt werden.

Die Herstellung von einem als ALPO-11 bezeichneten mikroporösen Alumophosphat wird in der US-A-4,310,440, Beispiele 32 bis 36 beschrieben. Danach wird die Verbindung synthetisiert, indem als Ausgangskomponenten Phosphorsäure, eine Aluminiumverbindung, sowie ein Dialkylamin z.B. Di-n-propylamin oder Di-iso-propylamin eingesetzt werden. Die Mischung wird hydrothermal behandelt. Als Produkt entsteht zunächst ein mikroporöses Alumophosphat, dessen Poren mit dem Templat gefüllt sind. Durch Kalzinieren dieser Verbindung läßt sich das Templat entfernen.

Die Herstellung von einem als SAPO-11 bezeichneten mikroporösen Silicoalumophosphat wird in der US-A-4,440,871, Beispiele 15 bis 22, beschrieben und erfolgt in analoger Weise wie beim ALPO-11 beschrieben, wobei lediglich dem Reaktionsansatz zusätzlich eine reaktive Siliciumquelle zugegeben wird.

Die Struktur des ALPO-11 und SAPO-11 ist identisch und wurde beispielsweise von Bennett et al. (Zeolites, Vol.7, (1987) S. 160) beschrieben. Die Struktur ist unter der Bezeichnung AEL als Kristallstruktur bei Meier und Olson ("Atlas of Zeolite Structure Types" 2nd Ed., Butterworths, London, 1987) klassifiziert.

Das Aluminiumphosphat VPI-5 ist ein Molekularsieb mit gleichförmigen eindimensionalen Kanälen und extra großen Poren mit 18 T-Atomen und einem freien zugänglichen Durchmesser von etwa 12 A. Die Herstellung dieser Substanz wird beispielsweise bei M.E. Davis et al. ACS-Symp. Ser. 398 (1989) S. 291-304 beschrieben. Hierbei wird wäßrige Phosphorsäure zu in H₂O suspendiertem Boehmit gegeben und nach einer Alterungsphase von 1,5-2 h unter Rühren wird n-Dipropylamin zugeführt. Diese Reaktionsmischung wird für 20-24 h bei 142°C gerührt. Die Eigenschaften und Charakteristika dieser Materialien wird beispielsweise in J. Phys. Chem. 95 (1991) 1380, Zeolithes 11 (1991) 583, J. Am. Chem. Soc. 111 (1989) 3919 beschrieben. Das Si-haltige Aluminiumphosphat mit VPI-5 Struktur ist ebenfalls bekannt und wird für die Herstellung der erfindungsgemäßen Farbmittel eingesetzt.

Die Struktur des VPI-5 wird unter der Bezeichnung VFI klassifiziert.

Die Adsorptionseigenschaften von ALPOs bzw. SAPOs fanden bisher nur wenig Anwendung. Gelegentlich wird die Adsorption von kleinen Molekülen (Wasser, Stickstoff oder auch Benzol) zur Charakterisierung von ALPOs und SAPOs benutzt. Dabei wird z.B. aus der Art des adsorbierten Moleküle und der Form der Adsorptionsisotherme auf Größe und Form der Mikroporen, Porenvolumen, Phasenreinheit oder Anwesenheit von Medsoporen geschlossen. (Übersichtsartikel E.M. Flanigen et al.: "Alumophosphate molecular sieves and the periodic table" Pure & Appl. Chem. Vol 58, Nr. 10 S. 1351 bis 1358 (1986)).

Weiterhin wurde die Adsorption von flüchtigen Carbonylen in ALPO-Strukturen dazu verwendet, um feinverteilte Metallcluster in den Mikroporen für katalytische Umsetzungen zu erzeugen (R.F. How et al.: "Comparison of Zeolites and Alumophosphates as hosts for transition metal complexes" in "Catalysis Today" 6 (1989) 113 bis 122).

Die selektiven Adsorptionseigenschaften von ALPOs werden ferner in EP-A-130 740 ausgenutzt, um ortho-substituierte Aromaten aus einem Isomerengemisch abzutrennen.

Die Adsorption von organischen Molekülen in ALPOs, welche zu farbigen Verbindungen führt, ist bisher lediglich von S.D. Cox et. al. in Chem. Mater. 2 (5), 1990, S. 609 beschrieben. In dieser Arbeit werden stickstoffhaltige Verbindungen (Nitro- und/oder Amino-substituierte Aromaten) eingesetzt, also Substanzen, welche z.B. auch als Template Verwendung finden. Die Verbindungen aus ALPOs und farbigen Stickstoff verbindungen sind schwach gelb gefärbt; die farbgebende Substanz ist jedoch nur schwach gebunden; mit Chloroform oder Aceton lassen sich die organischen Verbindungen aus den Mikroporen herauswaschen.

Chinizarin oder 1,4-Dihydroxyanthrachinon ist ein bekannter Anthrachinonfarbstoff mit hellroter Farbe. Synthese und Eigenschaften dieser Farbstoffklasse sind in vielen Lehrbüchern der organischen Chemie (z.B. H.Beyer, W. Walter : "Lehrbuch der organischen Chemie" Hirtzel Verlag 1981, Kapitel "Anthrachinonfarbstoffe" S. 604 bis 606) beschrieben.

Der vorliegenden Erfindung lag die Aufgabe zugrunde, organische Moleküle fest in ein Alumophosphatgerüst und/oder Silicoalumophosphatgerüst einzulagern, um so zu neuen Farbstoffen mit verbesserten Eigenschaften, wie Färbung, Beständigkeit oder besonderen optischen Eigenschaften zu gelangen.

Demgemäß wurden neue farbige, kristalline Alumophosphate und/oder Silicoalumophosphate vom AEL-Typ gemäß folgendem Röntgenbeugungsdiagramm:

| Interplanarer Abstand d(A) | Relative Intensität I/Iₒ x 100 |
|---|---|
| 10,91 ± 0,1 | 26 ± 10 |
| 9,19 ± 0,1 | 41 ± 10 |
| 6,79 ± 0,05 | 16 ± 10 |
| 5,57 ± 0,05 | 52 ± 10 |
| 4,39 ± 0,05 | 39 ± 10 |
| 4,18 ± 0,05 | 71 ± 10 |
| 4,09 ± 0,05 | 33 ± 10 |
| 3,98 ± 0,05 | 57 ± 10 |
| 3,86 ± 0,05 | 68 ± 10 |
| 3,81 ± 0,05 | 100 |

einer durch folgende Formel beschriebene Zusammensetzung:

a Chinizarin _{...} b Al₂O₃ · c P₂O₅ · d SiO₂

gefunden, wobei a zwischen 0,05 und 2, b und c zwischen 8 und 12, und d zwischen 0 und 4 liegt sowie Verfahren zu deren Herstellung und deren Verwendung.

Überraschenderweise ließ sich die Aufgabe dadurch lösen, daß man Chinizarin in ALPO-11 und/oder SAPO-11 einlagert. Chinizarin ist ein Molekül, welches keinen Stickstoff enthält und somit z.B. nicht als strukturgebende Verbindung (Templat) für AlPOs geeignet ist. Im Vergleich mit allen bisher in ALPO-11 der SAPO-11 adsorbierten Molekülen ist Chinizarin sehr groß. Von Meier und Olson ("Atlas of Zeolite Structure Types" 2nd Ed., Butterworths, London, 1987) werden für die Abmessungen des ALPO-11-Hohlraums die Angaben 3,9 x 6,3 A gegeben. Nach diesem Angaben sollte ein so großes Molekül wie Chinizarin (Abmessungen aus Molekülmodellen ca. 12 x 9 x 3,5 A) nicht in den ALPO-11 Hohlraum passen.

Überraschenderweise gelingt es nun, durch geeignete Behandlung einer Chinizarin-ALPO-11-Mischung, die Hohlräume von ALPO-11 mit Chinizarin-Molekülen zu beladen.

Farbige, kristalline Alumophosphate und/oder Silicoalumophosphate vom AEL-Typ lassen sich wie folgt herstellen:
Eine Mischung aus Chinizarin und ALPO und/oder SAPO, bevorzugt ALPO-11 und SAPO-11, kann hierzu bei Drücken zwischen 0,001 und 10 bar, bevorzugt zwischen 0,01 und 2 bar, besonders bevorzugt zwischen 0,05 und 1 bar und insbesondere zwischen 0,1 und 0,5 bar auf eine Temperatur von 50 bis 300°C, bevorzugt 130 bis 250°C, besonders bevorzugt 150 bis 200°C erhitzt werden. Die Temperatur wird im allgemeinen für eine Zeit von 10 sec bis 3 Stunden, insbesondere 1 bis 100 Minuten aufrechterhalten. Nach dieser Behandlung kann überschüssiges Chinizarin durch eine geeignete Behandlung entfernt werden.

Eine weitere Möglichkeit der Herstellung der neuen Verbindung ist die Synthese von Chinizarin aus geeigneten Edukten, z.B. Naphtochinon und Dihydroxybutadien.

Die Herstellung erfolgt im allgemeinen durch Diels-Alder-Reaktion von Naphtochinon und subst. Butadien oder Friedel-Crafts-Reaktion von Phthalsäureanhydrid und subst. Benzol oder Oxidation von subst. Anthracen in Anwesenheit von kalziniertem ALPO-11 oder SAPO-11. Dabei müssen die Eduktmolküle von der Größe her so gewählt werden, daß sie nicht größer sind als die Poren des ALPO-11/SAPO-11 und damit in die Hohlräume der angesprochenen Molekularsiebe passen. Die Reaktionsbedingungen bei dieser Synthese sind so zu wählen, daß pH-Werte von 4 bis 10, bevorzugt 5,5 bis 8, besonders bevorzugt 6,5 bis 7,5 eingehalten werden, daß die Struktur des Molekularsiebs nicht zerstört wird.

Nach der Synthese des Chinizarins in den Poren des ALPO-11 bzw. SAPO-11 wird überschüssiges Edukt und außerhalb der Poren gebildetes Chinizarin durch eine geeignete Behandlung, wie z.B. Extraktion mit Aceton oder Acetonitril, oder aber Erhöhung der Temperatur (Weg-sublimieren).

Eine weitere Möglichkeit der Herstellung der neuen Verbindung ist die Synthese des ALPO-11 bzw. SAPO-11 in Anwesenheit von Chinizarin. Dazu können zu einer üblichen ALPO- oder SAPO-Synthesemischung, welche aus einer Aluminium-, einer Phosphor-und gegebenenfalls aus einer Siliciumquelle besteht, Chinizarin und gegebenenfalls ein weiteres Templat gegeben und die Mischung bei Temperaturen von 100 bis 250°C hydrothermal in einem Autoklaven behandelt werden. Das entstandene Produkt wird abfiltriert und mit geeigneten Lösungsmitteln, wie a) Wasser (organische Edukte, Phosphor, Aluminium-, Siliciumverbindung) und b) Aceton oder Acetonitril (überschüssigen Chinizarins) zur Entfernung von nicht umgesetzten Edukten behandelt.

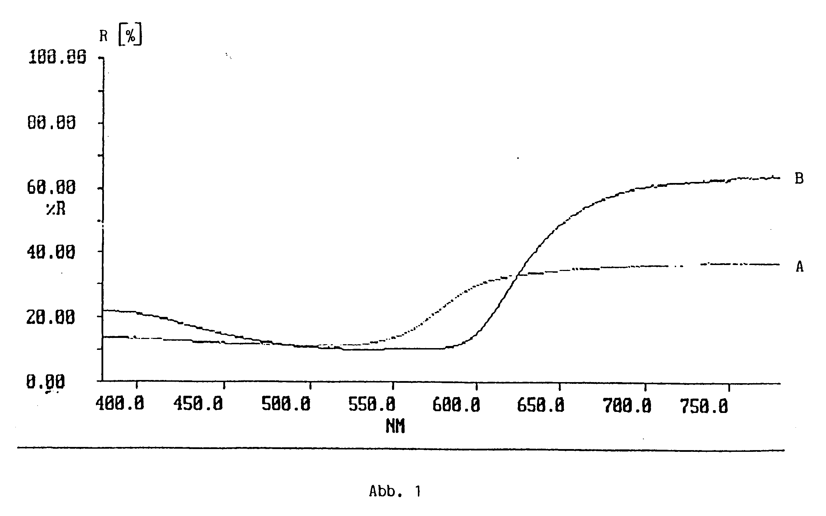

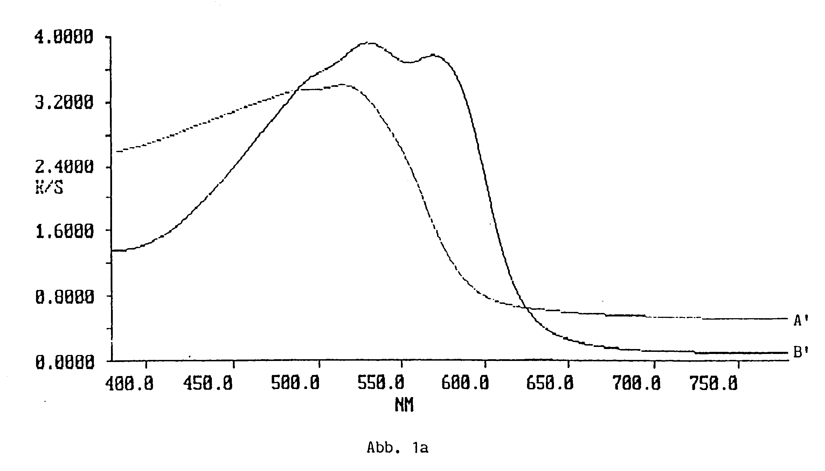

Die erfindungsgemäßen neuen farbigen, kristallinen Alumophosphate und/oder Silicoalumophosphate vom AEL-Typ unterscheiden sich schon in der Farbe (violett) deutlich von den Ausgangsmaterialien Chinizarin (hellrot) und ALPO-11 oder SAPO-11 (weiß). Das Remissionsspektrum sowie das daraus berechnete K/S-Spektrum (K = Adsorptionskoeffizient, S = Streukoeffizient; Berechnung nach der Kubelka/Munk-Theorie: K/S = (1-R)/(2R²) ) des neuen Stoffes (Abbildung 1 und 1a; Kurven B und B') unterscheidet sich deutlich von den entsprechnenden Spektren einer physikalischen Mischung von Chinizarin und ALPO-11 (Abbildung 1 und 1a, Kurven A und A'). Besonders klar ist in Abbildung 1 bzw. 1a die bathochrome Verschiebung zu erkennen, welche die Spektren der neuen Verbindung gegenüber den Spektren der physikalischen Mischung von Chinizarin und ALPO-11 zeigen.

Das Röntgendiffraktogramm der neuen Verbindung Zeigt folgende Linien:

| Interplanarer Abstand d(A) | Relative Intensität I/Iₒ x 100 |
|---|---|
| 10,91 ± 0,1 | 26 ± 10 |
| 9,19 ± 0,1 | 41 ± 10 |
| 6,79 ± 0,05 | 16 ± 10 |
| 5,57 ± 0,05 | 52 ± 10 |
| 4,39 ± 0,05 | 39 ± 10 |
| 4,18 ± 0,05 | 71 ± 10 |
| 4,09 ± 0,05 | 33 ± 10 |
| 3,98 ± 0,05 | 57 ± 10 |
| 3,86 ± 0,05 | 68 ± 10 |
| 3,81 ± 0,05 | 100 |

Das Röntgendiffraktogramm der neuen farbigen Verbindung zeigt keine Beugungslinien des Chinizarins. Verglichen mit dem Diffraktogramm des reinen ALPO-11 lassen sich deutliche Unterschiede, vor allem in der Intensität der Beugungslinien, erkennen.

Farbige kristalline Alumophosphate und/oder Silicoalumophosphate vom VFI-Typ lassen sich herstellen, indem man bei den eben beschriebenen Herstellungsverfahren statt ALPO-11 oder SAPO-11 die Molekularsiebe VPI-5 oder Si-VPI-5 einsetzt.

Aus der chemischen Analyse der neuen farbige, kristalline Alumophosphaten und/oder Silicoalumophosphate vom AEL-Typ oder VFI-Typ ergibt sich eine durch folgende Formel beschriebene Zusammensetzung:

a Chinizarin · b Al₂O₃ · c P₂O₅ · d SiO₂

wobei a zwischen 0,05 und 2, b und c zwischen 8 und 12, und d zwischen 0 und 4 liegt,
Die Beständigkeit der neuen Farbstoffe gegenüber organischen Lösungsmitteln wie z.B. Aceton, Acetonitril, Methanol, Ethanol oder Diethylether ist im Vergleich zum Chinizarin stark verbessert. Während sich Chinizarin z.B. in heißem Ethanol löst, bleibt die Farbe der neuen Verbindung auch nach mehrtägiger Soxhlet-Extraktion mit Ethanol erhalten. Das Lösungsmittel färbt sich dabei nur zuweilen wenig hellrot.

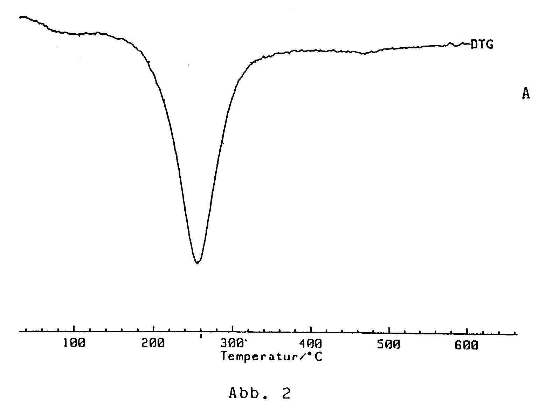

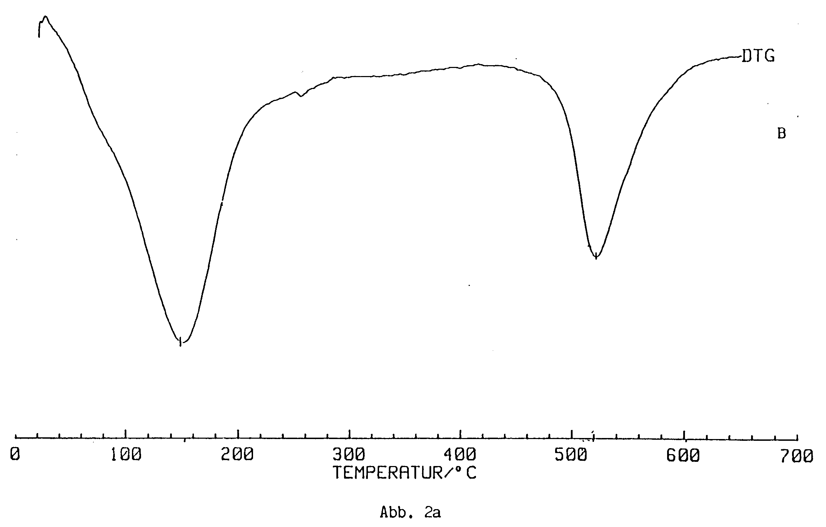

Auch die thermische Stabilität nimmt bei der neuen Verbindung im Vergleich zum Chinizarin deutlich zu. Während reines Chinizarin schon bei 200°C schmilzt und sich schon merklich verflüchtigt, bleibt das neue Material bis zu Temperaturen über 400°C unverändert fest; erst oberhalb 500°C zersetzt sich das in den Molekularsieb eingeschlossene Chinizarin unter Oxidation. Besonders deutlich wird dies bei der thermogravimetrischen Analyse der neuen Verbindung im Vergleich zu reinem Chinizarin (DTA-Kurven; Abbildung 2). Charakteristisch für die neue Verbindung (Kurve B) ist der exotherme Gewichtsverlust bei einer Temperatur um 520°C, welcher einer Zersetzung des in den Molekularsiebporen eingelagerten Chinizarins entspricht. Der Gewichtsverlust bei 150°C in derselben Kurve entspricht der Desorption von Wasser. Demgegenüber zeigt die DTG-Kurve von Chinizarin (Kurve A) lediglich einen Gewichtsverlust bei 260°C (Sublimation).

Anwendbar ist das neue Material daher als temperatur- und lösungsmittelbeständiger Farbstoff sowie als Pigment mit speziellem Farbton. Die Möglichkeit zur Speicherung von Information durch gezielte Modifikation des im Molekularsieb-Gerüst fixierten Farbstoffs ist gegeben. Die sehr langsam erfolgende Abgabe des Chinizarins in ein geeignetes Lösungsmittel kann zum kontrollierten Dosieren von Chinizarin angewandt werden. Durch die regelmäßige Anordnung der ALPO-11 oder VPI-5 Kanäle müssen in der neuen Verbindung auch die Chinizarin-Moleküle regelmäßig angeordnet sein. Diese Anordnung kann eine starke Änderung der linearen und nicht-linearen optischen Eigenschaften hervorrufen (Übersichtsartikel: D.J. Williams Angew. Chem. 96 (1984) 637 bis 651), was die Anwendung des Materials als optisches Element möglich macht. Photochemische und katalytische Anwendungen des neuen Materials sind möglich.

Die Erfindung wird durch die nachstehenden Beispiele erläutert.

### Beispiel 1

50 g kalzinierter ALPO-11 (hergestellt nach US-A-4,310,440, Beispiel 32) werden mit 10 g Chinizarin vermischt. Die Mischung besitzt eine hellrote Farbe. Die Mischung wird im Vakuum bei einem Druck von ca. 1 mbar auf eine Temperatur von ca. 200°C gebracht. Die entstehende Verbindung besitzt eine tiefe violette Färbung.

### Beispiel 2

Die violette Verbindung aus Beispiel 1 wird mehrmals mit heißem Ethanol gewaschen und anschließend in einer Soxhlet-Extraktion 24 Stunden mit Ethanol behandelt. Nach den Waschvorgängen ist die Farbe der Verbindung unverändert violett. Das Extraktions-Lösungsmittel ist nur schwach hellrot gefärbt.

Das getrocknete Material enthält 3,3 % Kohlenstoff, 37,4 % Al₂O₃ und 52,1 % P₂O₅, was einer Summenformel von

(0,5±0,1) Chinizarin · (10±1) Al₂O₃ · (10±1) P₂O₅

entspricht.

Das Remissionspektrum der Verbindung (Abb. 1, Kurve B) unterscheidet sich deutlich von dem Spektrum einer physikalsichen Mischung von Chinizarin und ALPO-11 (Abb.1, Kurve A).

### Beispiel 3

Die violette Verbindung aus Beispiel 1 wird mehrmals für jeweils 15 Minuten mit Acetonitril bei ca. 70°C gewaschen. Nach den Waschvorgängen ist die Farbe der Verbindung unverändert violett. Chemische Zusammensetzung und Remissionsspektrum entsprechen den in Beispiel 2 aufgeführten Werten.

### Beispiel 4

50 g kalzinierter SAPO-11 (hergestellt nach US 4,440,871, Beispiel 15) werden mit 10 g Chinizarin vermischt. Die Mischung besitzt eine hellrote Farbe. Die Mischung wird im Vakuum bei einem Druck von ca. 1 mbar auf eine Temperatur von ca. 200°C gebracht. Die entstehende Verbindung besitzt eine tiefe violette Färbung.

### Beispiel 5

Die violette Verbindung aus Beispiel 4 wird mehrmals mit Ethanol jeweils 15 min lang bei ca. 70°C gewaschen. Nach den Waschvorgängen ist die Farbe der Verbindung unverändert violett. Das getrocknete Material enthält 6,3 % Kohlenstoff, 32,4 % Al₂O₃ und 42,2 % P₂O₅ und 3,9 % SiO₂, was einer Summenformel von

(1±0,2) Chinizarin · (10±1) Al₂O₃ · (9±1) P₂O₅ · (2±0,4)SiO₂

entspricht.

### Beispiel 6

Die violette Verbindung aus Beispiel 2 wird auf 350°C erhitzt. Dabei verändert sich die Substanz nicht. Es ist weder eine Zersetzung der Substanz, etwa eine Abspaltung von Chinizarin aus den Mikroporen, noch eine Farbänderung festzustellen.

### Beispiel 7 (Vergleichsbeispiel)

50 g kalzinierter ALPO-11 werden mit 10 g Chinizarin vermischt. Die Mischung besitzt eine hellrote Farbe. Das Remissionsspektrum der Mischung ist dem des reinen Chinizarins sehr ähnlich. Im Beugungsdiagramm der Mischung sind die Linien des Chinizarins deutlich zu erkennen.

### Beispiel 8 (Vergleichsbeispiel)

Die hellrotgefärbte Mischung aus Beispiel 6 wird mehrmals mit Ethanol jeweils 15 min lang bei ca. 70°C gewaschen. Bei den Waschvorgängen ändert sich die Farbe der Mischung deutlich von rot zu einem sehr hellen rosa. Das nur noch schwach gefärbte Material enthält weniger als 1 % Kohlenstoff.

### Abbildungen:

- Abb. 1 und 1a:: Remissionsspektren und daraus errechnete K/S-Spektren einer physikalischen Mischung aus Chinizarin und ALPO-11 (Kurve A und A'), sowie der neuen Einlagerungsverbindung von Chinizarin in ALPO-11 (Kurve B und B')
- Abb. 2 und 2a:: Thermogravimetrische Analysen (DTG-Kurven) von reinem Chinizarin (Kurve A) sowie von der neuen Einlagerungsverbindung von Chinizarin in ALPO-11 (Kurve B)

### Beispiel 9

50 g getrockneter VPI-5 werden mit 10 g Chinizarin vermischt. Die Mischung besitzt eine hellrote Farbe. Die Mischung wird im Vakuum bei 1 mbar auf eine Temperatur von ca. 200°C gebracht. Die entstehende Verbindung besitzt eine tiefe violette Färbung.

Die violette Verbindung wird mehrmals mit heißem Ethanol gewaschen und anschließend in einer Soxhlet-Extraktion 24 Stunden mit Ethanol behandelt. Nach den Waschvorgängen ist die Farbe der Verbindung unverändert violett.

Das getrocknete Material enthält 4,7 % Kohlenstoff, 30,3 % Al₂O₃ und 40,4 % P₂O₅, was einer angenäherten Summenformel von

0,5 Chinizarin · 9 Al₂O₃ · 9 P₂O₅

entspricht.

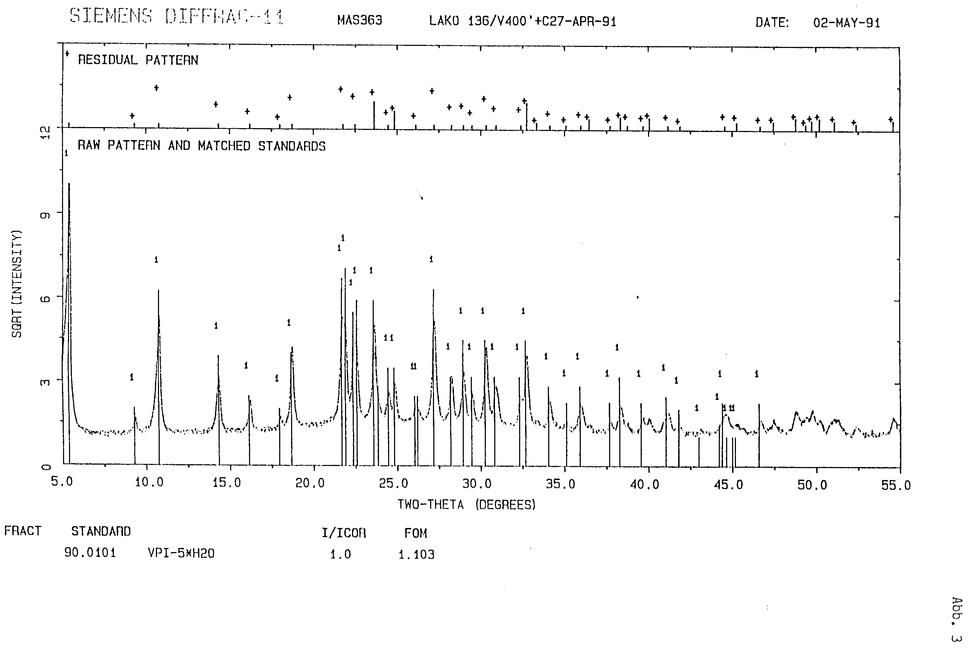

Das Röntgendiffraktogramm des Materials zeigt ausschließlich die Beugungslinien des Molekularsiebs VPI-5 (Abb. 3).

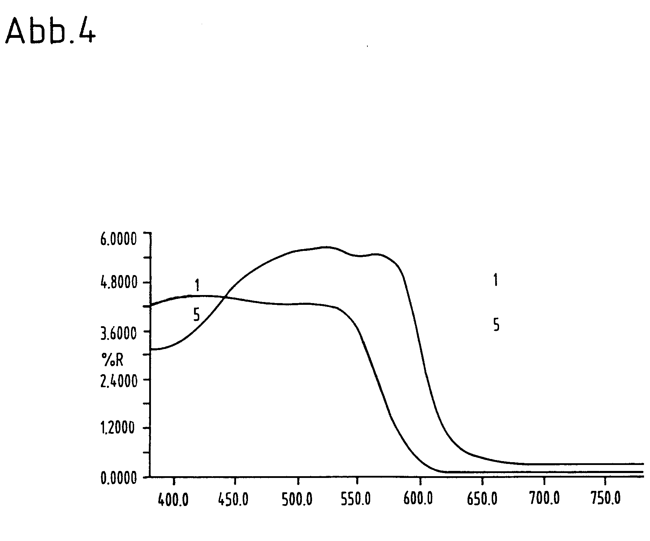

Das Remissionsspektrum der Verbindung unterscheidet sich sowohl von dem des reinen VPI-5 als auch von dem des Chinizarin; insbesondere ist eine deutliche bathochrome Verschiebung im Vergleich zum reinen Chinizarin augenfällig (Abb. 4).

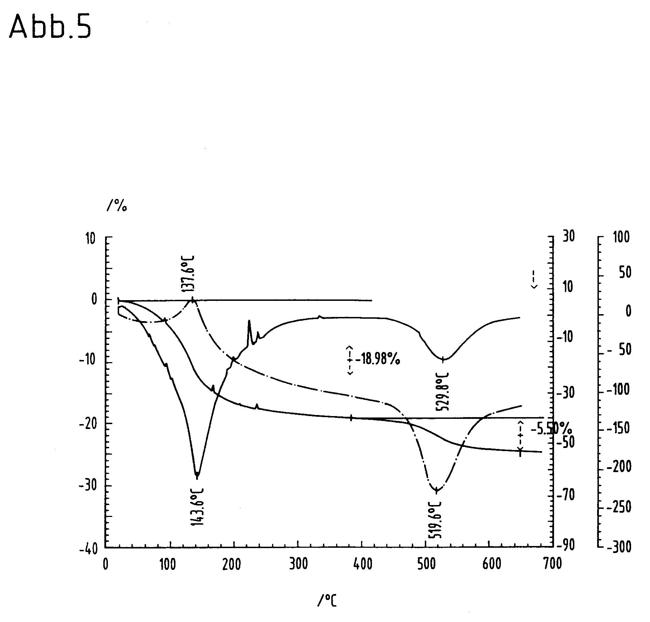

Die thermogravimetrische Messung zeigt, daß sich das im Molekularsieb gebundene Chinizarin erst bei Temperaturen oberhalb 500°C exotherm zersetzt (Abb. 5).

## Patentansprüche

1. Farbige, kristalline Alumophosphate und/oder Silicoalumophosphate vom AEL-Typ oder VFI-Typ.

2. Farbige, kristalline Alumophosphate und/oder Silicoalumophosphate vom AEL-Typ gemäß folgendem Röntgenbeugungsdiagramm:
| Interplanarer Abstand d(A) | Relative Intensität I/Iₒ x 100 |
|---|---|
| 10,91 ± 0,1 | 26 ± 10 |
| 9,19 ± 0,1 | 41 ± 10 |
| 6,79 ± 0,05 | 16 ± 10 |
| 5,57 ± 0,05 | 52 ± 10 |
| 4,39 ± 0,05 | 39 ± 10 |
| 4,18 ± 0,05 | 71 ± 10 |
| 4,09 ± 0,05 | 33 ± 10 |
| 3,98 ± 0,05 | 57 ± 10 |
| 3,86 ± 0,05 | 68 ± 10 |
| 3,81 ± 0,05 | 100 |
oder VFI-Typ einer durch folgende Formel beschriebenen Zusammensetzung:
a Chinizarin · b Al₂O₃ · c P₂O₅ · d SiO₂
wobei a zwischen 0,05 und 2, b und c zwischen 8 und 12, und d zwischen 0 und 4 liegt.

3. Verfahren zur Herstellung von farbigen, kristallinen Alumophosphaten oder Silicoalumophosphaten vom AEL-Typ oder VFI-Typ nach Anspruch 1, dadurch gekennzeichnet, daß man eine Mischung von Alumophosphaten oder Silicoalumophosphate n vom AEL-Typ oder VFI-Typ mit Chinizarin mischt und eine geeignete Behandlung bei Temperaturen von 50 bis 300°C ausführt.

4. Verwendung der farbigen, kristallinen Alumophosphaten oder Silicoalumophosphaten vom AEL-Typ oder VFI-Typ nach Anspruch 1 als Farbstoffe, optische Elemente sowie als Adsorptionsmittel und als Katalysatoren.
